# EUROPEAN PATENT SPECIFICATION

(11) **EP 1 347 021 B1**
(45) Date of publication and mention of the grant of the patent: **12.06.2013**
(21) Application number: 03003976.2
(22) Date of filing: 22.02.2003
(51) Int. Cl.: C09D 5/03

(54) **Coating powder compositions and method**
Pulverbeschichtungszusammensetzung und Verfahren
Composition de revêtement en poudre et procédé

(30) Priority: 20.03.2002 US 102216; 19.12.2002 US 326785
(43) Date of publication of application: 24.09.2003
(73) Proprietor: Spraylat Corporation, Pelham, New York 10803 (US)
(72) Inventor: Ladatto, Steven M., Lake Kiowa Texas 76240 (US)
(74) Representative: Weber, Roland

(56) References cited:
- EP-A- 0 845 507
- US-A- 5 256 493
- US-A- 5 856 378
- US-A- 6 133 344
- US-A- 6 146 145

## Description

The present invention is directed to coating powder compositions and to methods for preparing and using novel powder coating compositions which include admixing inorganic tinting agents, such as a mixed metal oxide or titanium dioxide, to coating powder base compositions.

### BACKGROUND OF THE INVENTION

It is known in liquid paint systems to add a tinting agent to a finished base composition to achieve a final colored paint composition. This technology permits the preparation of a large array of liquid custom color paints that can be created from a small number of finished base compositions. In coating powder paint systems, the addition of a tinting agent to a coating powder base composition is more difficult and generally requires extrusion, grinding, or sieving to adequately mix the dry components. Otherwise, when a coating powder base and tinting agent are mixed, resultant coatings having poor flow are obtained. It is believed that this well-recognized difficulty for coating powder systems is caused by low wetting properties of the coating powder base composition. Thus, it is a long standing problem in the coating powder industry to be able to produce coating powders that are capable of obtaining good quality coatings using the highly advantageous technique currently used for liquid paint systems.

The present invention may be advantageously used with a wide variety of coating powder compositions including thermosetting, thermoplastic, radiation curable, and dual systems such as thermosetting/radiation curable and fluorocarbon polymer thermosetting systems. Once a base coating powder having sufficient wetting properties, as measured by viscosity, is produced, a particulate tinting agent(s) is then mixed with such particulate base coating powder to produce a desired color. An important commercial advantage of the invention is that a base coating powder can be produced and then stored to await the final, color-producing mixing step. This procedure is not presently believed to be followed in the coating powder industry. To be able to obtain a desired colored powder by simply mixing a base and tinting agent would permit pre-production of large quantities of the base and then the use of a portion of such base to obtain a desired color rather than having a single production run capable of producing only one color. Obviously, shorter production and delivery times are possible with the invention. Moreover, if a coating powder manufacturer is in the midst of a production run of a given color, the only alternative to being able to quickly produce a different color could be to interrupt the run, clean the equipment, and then produce the other color. Then the equipment would require cleaning once more to produce the balance of the first run. This substantial problem is eliminated with the present invention, thus enabling a wide variety of colored powders to be quickly produced and shipped to customers without interruption of the base production run.

Others have attempted to solve this significant, long-standing problem in the art with use of techniques that are distinct from that of the present invention. A more detailed description of such attempts is set forth below.

United States Patent No. 5,856,378, granted to Ring et al., discloses a powder coating composition for providing a coating having certain appearance or performance attributes. The powder coating composition comprises composite particles that are agglomerates of individual particle components that have been fused or bonded together into composite particles which are air-fluidizable and do not break down under the mechanical and/or electrostatic forces encountered during their application to the substrate. The individual particulate components, present as discrete particles within the composites, comprise a first, solid, particulate component and one or more additional, solid, particulate components that differ from the first particulate component. Each particle of the first component comprises a solid polymeric binder system at least a portion of which is a resin in an amount sufficient to impart coatability to the composition. The particles of the additional components(s) containing at least one substance that provides, together with the first component, the certain appearance or performance attribute to the coating when processed into a coating with the first component, the identities, particle sizes and proportions of the components in the composition being selected such that, when the composition is applied to a substrate and heated to form a continuous coating, a coating having the certain appearance or performance attribute is formed.

United States Patent No. 6,133,344, granted to Blatter et al., discloses a colored pulverulent coating composition comprising spherical particles having a mean particle size >40um, in two or more different color tints. At least the particles of one tint are colored and the particles of the other tint may be colorless. The particles employed for the mixture each have a monomodal particle size distribution with a span (d90-d10/d50) of <2.5 and the pulverulent coating composition can be melted at temperatures <200°C. to form a continuous coating. The differences in color that stem from the different-colored particles are indistinguishable to the human eye in the cured coating.

United States Patent No. 6,133,344, granted to Itakura et al., discloses a method of producing a color-matched powder coating. The method comprises providing a colored light-transmittable powder coating that is colored by a coloring agent and a colorless light-transmittable powder coating containing no coloring agent. A blending ratio is calculated of the colored powder coating and the colorless powder coating. The colored powder coating and the colorless powder coating are weighed on the basis of the calculating step. The powder coating is dry blended using a mixer.

EP 0 845 507 A discloses a coating composition comprising two or more powder coatings of which each color is different, wherein each of the powder coatings fuses with each other and is heat-cured, to thereby give a coating film having a homogenous hue.

US 5,256,493 A discloses a method of coating substrates by contacting said substrate with a liquid curable composition containing a sulfonimide cure catalyst, aminoplast crosslinker, and a resin.

US 6, 146,145 A discloses a method ofproducing a color-matched powder coating, wherein a blending ratio of a colored powder coating and a colorless powder coating is calculated and said powders are then admixed in the calculated ratio.

### SUMMARY OF THE INVENTION

The present invention is directed to base coating powder compositions comprising a resin; curing agent in an amount effective to cure the resin (unless the resin is thermoplastic); an effective amount of a resin modifying agent to obtain a viscosity of the base composition of between 15 to 85 Pa·s (Pascal-seconds); a flow agent in an optional amount up to 5 phr; a degassing agent in an optional amount of up to 5 phr; and an organic and/or inorganic pigment in an optional amount up to 85 phr. The term phr means parts of ingredient per hundred parts of resin. The base composition has a viscosity range of from 15 to 85 Pa·s (measured using an ICI cone plate viscometer set at 160°C.) to achieve the necessary wetting properties which will permit uniform mixing of the base with a tinting agent and/or additive to produce a coating powder mixture that can be readily applied to a substrate to produce a high quality coating. The resin may be formulated to the above-specified viscosity or such viscosity may be obtained by incorporating a resin-modifying agent into the base composition. The tinting agent may comprise a mixed metal oxide, titanium dioxide, or a hybrid organic-inorganic material. Organic polymer soluble dyes (otherwise known as "solvent dyes") also may be used as a tinting agent. The tinting agents, when present, are included in an amount effective to tint the base composition, typically from 0.01 % to 20% of the weight of the base.

Once the base composition is produced by conventional means such as mixing its respective constituents, extruding the mixture, and grinding the extrudate into a powder, and then optionally classifying the coating powder, the thus provided base compositions and tinting agent are mixed, preferably by dry mixing, into a final coating powder composition mixture having a desired color.

In another embodiment of the invention, the base composition may be mixed with an additive that is capable of altering a coating property of said composition. The addition of a tinting agent is optional with this embodiment.

In a further embodiment, a desired final cured coating powder property, such as gloss, may be obtained by mixing at least two base compositions to obtain a desired property. In addition, a tinting agent may be added to the two base compositions to obtain a desired color. Such procedure further facilitates the production of small batches of coating powders.

The coating powder composition mixture may be electrostatically charged, applied to a substrate, and cured, if necessary, to produce a good quality coating.

### DETAILED DESCRIPTION OF THE INVENTION

The present invention pertains to coating powder base compositions that can be simply admixed, preferably in the dry state, with tinting agents, such as a mixed metal oxide, titanium dioxide, hybrid organic-inorganic materials, and/or organic polymer soluble dyes to prepare the final powder coating compositions. In conventional powder coating compositions, tinting agents must be added to coating powder compositions, along with other ingredients, before processing such as premixing, extrusion, cooling, grinding, classifying, and sieving. In the present invention, tinting agents are added to coating powder base compositions in a finished state, followed by a short mixing cycle. No other processing is required. Unlike organic tinting agents, which tend to decompose easily and provide off colors, the tinting agents of the present invention are compounds that can be post-mixed with coating powder base compositions to prepare the final coating powder mixture compositions. The ability to post-mix dry tinting agents and/or additives with a dry base composition enables the creation of a final coating powder of virtually any color, gloss, texture, structure, lubricity, or conductivity, thereby greatly reducing the time to produce a given color and the number of finished coating powders that need to be stored in inventory. The properties of the base compositions may vary in color, gloss, or texture but are formulated so that dry materials can be introduced by a post-addition method.

The term "additive", as used herein, refers to any chemical that is added to a coating powder base to alter the finish or enhance a desired property of the finished powder coating.

The term "amorphous fumed silica", as used herein, refers to naturally occurring or synthetically produced (SiO₂) characterized by the absence of a pronounced crystalline structure.

The term "coating powder base composition", as used herein, refers to the finished coating powder used as an intermediate for the production of an intermixed final color. The base may stand alone as a coating material but has attributes that enable it to be used with tinting agents and additives defined herein.

The term "calcination", as used herein, refers to a method of heating a material to a high temperature, but below its fusing temperature, to cause the material to either lose moisture or to become oxidized in such a way to stabilize and increase the hardness of the substance.

The term "complex inorganic metal ion compound" or "mixed metal oxide", as used herein, refers to compounds from which certain tinting agents are composed. These materials are produced by calcination and are comprised of different metal atoms that form ionic bonds with oxygen within a crystal lattice.

The term "polyester-TGIC", as used herein, refers to a thermosetting coating powder base composition in which the thermosetting resin comprises carboxyl functional (-COO-) polymers, which react with triglycidyl isocyanurate in the presence of heat.

The term "polyolefin", as used herein, refers to a polymer derived from simple olefins, specifically, ethylenes and propylenes, which when polymerized, provide compounds with relatively high reactivity due to the double bonds present in each monomer.

The term "precipitation", as used herein, refers to the sedimentation of a solid material from a liquid solution by means of applied heat, cold, or by a chemical reaction.

The term "spinel-type structure", as used herein, refers to a cubic crystal arrangement in which the ionic bonds are parallel to the sides of the cube. This type of crystalline structure is common between the tinting agents used herein and results in highly stable tinting agents.

The term "tinting agent", as used herein, refers to a chemical compound used to change the color of a base composition.

The term "thermoplastic", as used herein, refers to a coating powder that will repeatedly melt when subjected to heat and solidify when cooled.

The term "pigment", as used herein, refers to finely ground, natural or synthetic particles which when dispersed in a coating powder may provide, in addition to color, other properties such as opacity, hardness, durability, and corrosion resistance. The term is used to include extenders as well as white or color pigments.

Any coating powder may be suitably used in the practice of the invention, including thermosetting; thermoplastic; radiation curable, especially such as those cured by UV or IR; dual curing coatings, such as those curable by thermal and radiation means; and fluorocarbons.

Thermosetting resins which may be employed in the present invention may be any thermosetting resin that has sufficient wetting properties so as to yield a thermosetting coating powder base composition that can be readily admixed with tinting agents and/or additives. Thermosetting resins are materials that polymerize by the action of heat into a permanently solid and relatively infusible state. Thermosetting resins having high flow and low viscosity provide the best results in the present invention. Non-limiting illustrative thermosetting resins may be selected from the group consisting of alkyds, acrylics, aminos (melamine and urea), epoxys, phenolics, polyesters (carboxyl, hydroxyl, and hybrid), silicones, and urethanes.

Alkyd resins are prepared by esterification of a polybasic acid with a polyhydric alcohol to yield a thermosetting hydroxycarboxylic resin. Glycerol and pentacrythritol are the most common polyhydric alcohols for alkyd resins. Mixtures of pentacrythritol and ethylene glycol may be used to prepare medium and short oil alkyds with good compatibility properties, gloss retention, and durability. Polyols such as sorbitol and diethylene glycol may also be used. The most important polybasic acids for alkyd resins are phthalic acid and isophthalic acid. Other dibasic acids used in alkyd resins to impart special properties are adipic acid, azelaic acid, sebacic acid (to impart flexibility), tetrachlorophthalic anhydride, and chlorendic anhydride (to impart fire-retardant properties).

Acrylic resins are prepared by the polymerization of acrylic derivatives such as acrylic acid, methyl acrylate, ethyl acrylate, methacrylic acid, methyl methacrylate, glycidol methacrylate, and ethyl methacrylate. Suitable acrylic resins are Reichhold A249a (Reichhold Chemicals, Inc.), Reichhold A-229-A (Reichoold Chemicals, Inc.), and Anderson P7610 (Anderson Development Co.).

Amino resins are prepared by the addition reaction between formaldehyde and compounds such as aniline, ethylene urea, dicyandiamide, melamine, sulfonamide, and urea. The urea and melamine compounds are most widely used. There are many types of amino resins. Ethyleneurea H resin, based on dimethylolethyleneurea (1,3-bis(hydroxymethyl)-2-imidazolidinone), is prepared from urea, ethylenediamine, and formaldehyde. Propyleneurea-formaldehyde resin, 1,3-bis(hydroxymethyl)-tetrahydro-2(1H)-pyrimidinone, is prepared from urea, 1,3-diaminopropae, and formaldehyde. Triazone resin is prepared from urea, formaldehyde, and a primary aliphatic amine, usually hydroxyethylamine. Uron resins are mixtures of a minor amount of melamine resin and uron, predominantly N, N'-bis(methoxymethyl)uron plus 15-25% methylated ureaformaldehyde resins. Glyoxal resins, based on dimethyloldihydroxyethylencurea in which methanol groups are attached to each nitrogen, are prepared from urea, glyoxal, and formaldehyde. Melamine-formaldehyde resins include the dimethyl either of trimethylolmelamie. Methylol carbamate resins are derivatives made from urea and an alcohol, the alkyl group can vary from a methyl to a monoalkyl ether of ethylene glycol. Other amino resins include methylol derivatives of acrylamide, hydantoin, and dicyandiamide.

Epoxy resins are generally prepared by reaction of an epoxide and an alcohol. Structurally, the epoxy groups are three-membered rings with one oxygen and two carbon atoms. The most common epoxy resins are made by reacting epichlorohydrin with a polyhydroxy compound, such as bisphenol A. Epoxy resins produced in this manner are called diglycidyl ethers of bisphenol A (bis-A). Changing the ratio of epichlorohydrin to bis-A, changes the resin range from low-viscosity liquids to high-melting solids. The epoxy phenol novolak resins, novolak resins whose phenolic hydroxyl groups have been converted to glycidyl ethers, are the most important. Epoxy resins are cured by cross-linking agents such diethylenetriamine, triethylenetetramine, tetraethylenepentamine, diethylaminopropylamine, and piperazines. Suitable epoxy resins are Ciba-Geigy GT-9013 (Vantico Inc.), GT-7014 (Vantico Inc.), GT-7074 (Vantico Inc.), and Kukdo 242G (Kukdo Chemical Co. Ltd.).

Phenolic resins are prepared by the reaction of phenols and aldehydes, often with the use of hexamethylenetetramine as a curing agent. Phenolic compounds may be reacted with a wide variety of aldehydes and other compounds to yield many modified polymers. The reaction of a phenol with an aldehyde (generally that between phenol and formaldehyde) leads to the formation of two classes of phenolic resins, novolacs and resols. Novolacs are prepared with an acid catalyst and substantially less than one mole of aldehyde per mole of phenol and require the addition of a curing catalyst to become thermosetting. Resols are prepared with from 1 to 3 moles of aldehyde per mole of phenol and employ a basic condensation catalyst and are inherently thermosetting.

Polyester resins (carboxyl, hydroxyl, and hybrid) are prepared by reacting unsaturated dibasic acids (unsaturated acids or anhydrides) with polyhydric alcohols. Preferred carboxyl polyester resins are Crylcoat 7304 (UCB Chemicals Corp.), Crylcoat 7305 (UCB Chemicals Corp.), Crylcoat 7309 (UCB Chemicals Corp.), Crylcoat 7337 (UCB Chemicals Corp.), Rucote 905 (Ruco Polymers), and Rucote 915 (Ruco Polymers). Preferred hydroxyl polyester resins are Rucote 102 (Ruco Polymers), Rucote 104 (Ruco Polymers), Rucote 112 (Ruco Polymers), Crylcoat 290 (UCB Chemicals Corp.), Crylcoat 291 (UCB Chemicals Corp.), and Crylcoat 690 (UCB Chemicals Corp.). Hybrid polyester resins may also be employed such as Rucote 551 (Ruco Polymers), Rucote 560 (Ruco Polymers), Rucote 570 (Ruco Polymers), and Crylcoat 7401 (UCB Chemicals Corp.).

The di- and tri-basic acids that may be employed in the carboxyl polyester resins include 1,2-benzenedicarboxylic acid (88-99-3), 1,3-benzenedicarboxylic acid (121-91-5), 1,3-benzenedicarboxylic acid, dimethyl ester (1459-9304), 1,4-benzenedicarboxylic acid (100-21-0), 1,4-benzenedicarboxylic acid, diethyl ester (636-09-9), 1,4-benzenedicarboxylic acid, dimethyl ester (120-61-6), 1,2,4-benzenetricarboxylic acid (528-44-9), butanedioic acid (110-15-6), butanedioic acid, diethyl ester (123-25-1), butanedioic acid, dimethyl ester (106-65-0), 2-butenedioic acid (E)- (110-17-8), hexanedioic acid (124-04-9), hexanedioic acid, dimethyl ester (627-93-0), hexanedioic acid, diethyl ester (141-28-6).

The polyols that may be employed in the carboxyl polyester resins include 1,3-butanediol (107-88-0), 1,4-butanediol (110-63-4), 1,4-cyclohexanedimethanol (105-08-8), 1,2-ethanediol (107-21-1), ethanol, 2,2'-oxybis- (111-46-6), 1,6-hexanediol (629-11-8), 1,3-pentanediol, 2,2,4-trimethyl- (144-19-4), 1,2-propanediol (57-55-6), 1,3-propanediol, 2,2-bis(hydroxymethyl)- (115-77-5), 1,3-propanediol, 2,2-dimethyl- (126-30-7), 1,3-propanediol, 2-ethyl-2-(hydroxymethyl)- (77-99-6), 1,3-propanediol, 2-(hydroxymethyl)-2-methyl- (77-85-0), 1,3-propanediol, 2-methyl (2163-42-0), 1,2,3-propanetriol (56-81-5).

Silicone resins are highly cross-linked siloxane systems. Silicone resin chemistry is based on the hydrides, or silanes, the halides, the esters, and the alkyls or aryls. The silicon oxides are composed of networks of alternate atoms of silicon and oxygen so arranged that each silicon atom is surrounded by four oxygen atoms and each oxygen atom is attached to two independent silicon atoms. The crosslinking components are usually introduced as trifunctional or tetrafunctional silanes in the first stage of preparation. The cure of silicone resins usually occurs through the formation of siloxane linkages by condensation of silanols.

Polyurethane resins are prepared by the reaction of a polyisocyanate with a polyol. Polyurethane resins contain carbamate groups or urethane groups, -NHCOO-, in their backbone. Illustrative polyisocyanates include ethylene diisocyanate; ethylidene diisocyanate; propylene diisocyanate; butylene diisocyanate; hexamethylene diisocyanate; toluene diisocyanate; cyclopentylee-1,3,-diisocyanate; 3-isocyanatomethyl-3,5,5-trimethylcyclohexyl isocyanate; 3-isocyanatomethyl-3,5,5-trimethylcyclohexyl isocyanate cyanurate; cyclohexylene-1,4-diisocyanate; yclohexylene-1,2-diisocyanate; 4,4'-diphenylmethanediisocyanate; 2,2-diphenylpropane-4,4'-diisocyanate; p-phenylene diisocyanate; m-phenylene diisocyanate; xylylene diisocyanate; 1,4-naphthylene diisocyanate, 1,5-naphthylenediisocyanate; diphenyl-4,4'-diisocyanate, azobenzene-4,4'diisocyanate; diphenylsulphone-4,4'-diisocyanate; dichlorohexamethylene diisocyanate; furfurylidene diisocyanate; 1-chlorbenzene-2,4,diisocyanate; 4,4',4"-triiiisocyanato-toluene and 4,4'-dimethyldiphenylmethant-2,2',5,5-tetraisocyanate, and the like. Illustrative polyols include polyhydroxy ethers (substituted or unsubstituted polyalkylene ether glycols or polyhydroxy polyalkylene ethers), polyhydroxy polyesters, the ethylene or propylene oxide adducts of polyols, and the monosubstituted esters of glycerol.

Thermosetting coating powders suitable for use in the invention are well known in the art and include resins such as epoxy resins, polyester resins, urethane resins, acrylic resins, and fluorocarbon resins.

Functionally reactive fluorocarbon polymer powders, may be utilized in the invention. Such polymer typically comprises copolymerized ethylenically unsaturated monomers containing carbon-to-carbon double bond unsaturation including minor amounts of hydroxylated vinyl monomers and major amounts of fluorocarbon monomers. Such functional fluorocarbon polymer may be adapted to be cross linked with a blocked isocyanate cross linking resin. Such resins may further contain hydroxyl functional acrylic polymers or polyester polymers that can co react with the unblocked diisocyanate upon thermal curing of the powder. Such coating powders are further described in United States Patent No. 4,916,188.

Thermoplastic coating powders suitable for use in the invention are well known in the art and may include vinyls, polyolefins, nylons, polyesters, etc.

Radiation curable coating powders are well known in the art. One important class of radiation curable coating powder is UV curable powders. UV curable powders have the ability to flow and cure and produce smooth coatings at much lower temperatures than previously possible with traditional thermosetting coating powders. This ability is primarily due to the curing reaction being triggered by photo-initiated radiation rather than heat. Typically, UV powders are formulated from solid unsaturated base resins with low Tg, such as unsaturated polyesters; unsaturated co-polymerizable crosslinker resins, such as vinyl ethers; photoinitiators; flow and leveling agents; performance-enhancing additives; and, if necessary, pigments and fillers. It is also common in the coating powder art to replace all or part of the base resins or crosslinkers with crystalline materials to provide powders with lower melt viscosity and better flow out behavior.

As is the case with thermosetting coating powders, UV curable coating powders may be applied to a substrate in the usual fashion, with use of electrostatic spray techniques and then cured by radiation.

In another type of curing, a coated substrate is heated for as long as required to drive out substrate volatiles and fuse the powders into a smooth molten coating. Immediately following fusion, the molten coating is exposed to UV light, which, in an instant, cures and hardens the applied powder into a durable, extraordinarily smooth, attractive coating. In this instance, a dual cure involving both thermal and radiation curing is used.

The amount of resin used in the coating powder base composition may vary depending upon the particular resin employed as well as for the particular end use of the coating powder base composition. In general, the resin is typically present in the coating powder base composition in an amount from 40% to 95%, preferably from 50% to 85%, more preferably from 55% to 75%, and most preferably from 60% to 70%, by weight of the coating powder base composition.

Curing agents, which may be employed in the present invention, may be any curing agent that provides sufficient cross-linking for curing. Non-limiting illustrative curing agents for thermosetting resins include TGIC - Araldite PT-810 (Ciba-Geigy); polyurethane - - Alcure 4400 (Eastman Chemical); Creanova B-1530 (Creanova), Creanova B-1540 (Creanova); Epoxy- Dicy CG-1200 (461-58-5) (Aldrich Chemical Co., Inc.), Ciba-Geigy HT-2844 (93-69-6) (Vantico), Crenova B-68 (Creanova), and Creanova B-55 (Creanova).

The amount of curing agent used in the thermosetting coating and/or radiation curable powder base compositions may vary depending upon the particular curing agent and resin employed as well as for the particular end use of the coating powder base composition. A curing agent is typically present in the thermosetting coating powder base composition in an amount effective to cure the resin, typically from 2 to 40 phr, preferably from 5 to 35 phr, more preferably from 10 to 25 phr, and most preferably from 15 to 20 phr if the curing agent is used.

Thermoplastic coating powders require no curing agent as such powders are applied to a substrate and then melted by heating to form a coating.

Resin modifying agents which are employed in the present invention include the following: alkylammonium salts of polyfunctional polymers, polysiloxane copolymers, acrylic homopolymers, acrylic copolymers, salts of alkyl amide esters, and all of the above resin modifying agents with or without mixing with silica. Silica is useful to place the agents in powder form. Non-limiting illustrative resin modifying agents may be selected from Synthrowet PA-100 (Synthron Inc.), Crayvallac PC (Ray Valley Ltd.), and Piioester 4360-40 (Pioneer Plastics, Inc.).

A viscosity range of from 15 to 85 Pa·s is suitable, with a range from 15 to 50 Pa·s being preferred, and a range from 15 to 30 Pa·s being most preferred. The above preferences lead to coating powders having optimized coating properties. Lower viscosities permit the inclusion of larger amounts of tinting agents. However, viscosities at the lower end of the 2 to 85 Pa·s range, tend to produce lesser quality coatings because of excessive flow.

The amount of resin modifying agent used in the coating powder base compositions of the present invention is an amount effective to obtain the desired viscosity in the base composition. Typically up to 10 phr is effective to provide sufficient viscosity to yield a coating powder base composition that can be readily admixed with tinting agents and additives in a dry state and form a good quality coating. The amount of resin modifying agent used in the coating powder base composition may vary depending upon the particular resin modifying agent and resin employed as well as for the particular end use of the coating powder base composition. The resin modifying agent present in the coating powder base composition in an amount effective to obtain the desired viscosity. The resin modifying agent is present from 0.1 to 5 phr, preferably from 0.5 to 4 phr, more preferably from 0.8 to 3 phr, and most preferably from 1 to 2 phr.

Flow additive agents, which may be optionally employed in the present invention, may be any flow additive agent that promotes the flow of the coating powder base compositions thereby providing good resultant coating properties. Non-limiting illustrative, well-known flow additive agents include Modafow III (9003-01-4) (Solutia Chemicals, Inc.), Modaflow 2000 (Solutia Chemicals, Inc.), and Silwet L6705 (OSI Specialties, Inc.).

The amount of flow additive used in the coating powder base compositions of the present invention is an amount effective to promote the flow of the coating powder base compositions, thereby providing good mixing properties. The amount of flow additive used in the coating powder base composition may vary depending upon the particular flow additive agent and the resin employed as well as for the particular end use of the coating powder base composition. Typically, the flow additive, when present in the coating powder base composition, is in an amount from up to 5 phr, preferably 0.2 to 5 phr, more preferably from 0.3 to 4 phr, even more preferably from 0.5 to 3 phr, and most preferably from 1 to 2 phr.

Degassing agents, which may be optionally employed in the present invention, include any degassing agent that promotes degassing of the coating powder base compositions thereby providing smooth coating properties. Non-limiting illustrative, degassing agents may be selected from benzoin, Uraflow B (Aldrich Chemical Co., Inc.), and Troy EX-542 (Troy Corp, USA). Preferably, the degassing agent is benzoin or Troy EX-542.

The amount of degassing agent used in the coating powder base compositions of the present invention is an amount effective to promote the degassing of the coating powder base compositions, thereby providing smooth coating properties. The amount of degassing agent used in the coating powder base composition may vary depending upon the degassing agent and the resin employed as well as for the particular end use of the coating powder base composition. Typically, the degassing agent is present in the coating powder base composition up to 2 phr, preferably from 0.2 to 1.5 phr, more preferably from 0.4 to 1.2 phr, and most preferably from 0.5 to 1 phr.

Organic or inorganic pigments may be optionally included in the base composition of the present invention. Such pigments may be white, gray, black, red, orange, yellow, blue, violet, or any other desired color. Such pigments are well known and commercially available.

Organic pigments include PV Fast Blue A2R, PV Fast Blue A4R, PV Fast Blue BG, PV Fast Blue B2GA, Paliogen Blue L6385, Paliogen Blue L6470,k Heliogen Blue L6875F, Heliogen Blue L6989F, Irgalite Blue BCFR, Irgalite Blue 2GW, Irgalite Blue PDS6, Irgalite Blue GLSM, Heliogen Green L8605, Heliogen Green L8730, Heliogen Green L9361, PV Fast Green GNX, Hostaperm Green GG-01, PV Fast Red HF4B, Novaperm F5RK, Novaperm F3Rk-70, Novaperm Red BLS02, Paliogen Red L3885, Paliogen Red L3910HD, Irgazin Red BPT, Irgalite Red FBL, Cromophtal Red A2B, Cromophtal Orange 2g, Irgazin Orange 5R, Paliotol L2930HD, Sico Orange L3052HD, Novaperm Orange H5G70, Novaperm Orange HL, Novaperm Yellow FGL, Hanso Yellow 10G, Novaperm Yellow M2R70, Novaperm Yellow 4TG, Paliotol Yellow L1970, Paliotol Yellow L0960, Cromophtal Yellow 8GN, Irgazin Yellow 5GT, Monastral Magenta RT243D, Monastral Violet R RT201D, permanent Bordeaux FGR, PV Fast Violet ER, Paliotol Black L0086, Black Pearls 2000, Raven 14, Raven 1255, Monarch 1300, Black FW-200, Black Oxide F6331, and Orasol Black CN. White organic tinting agents may include R-700 White, R-706 White, R-960 White, Kronos 2310, Tioxide RL-6, and White TR-93.

Inorganic pigments include lithopone, zinc oxide, and titanium dioxide, mixed metal oxides, umbers, ochres, siennas, and others.

Such pigment imparts a color to the base composition and thus permits subsequent color variations when a tinting agent is mixed with the base composition. Such combinations of pigments and tinting agents permit varying degrees of chromaticity. Should pigments not be included in the base composition, the tinting agent produces a translucent color of low chromaticity. By applying the additive principles of color, uniform monochromatic colors are attainable. When these small-sized tinting compounds are added to the coating powder base composition, a microscopic matrix is created, and the color the naked eye sees is the sum of the different tinting agent particles in conjunction with the base. For example, when a white base is crowded with small black tinting particles, the naked eye will see gray. It is this principle along with different colored bases and tinting agents that permits the creation of the colors produced by this technology.

The amount of pigment used in the coating powder base compositions of the present invention is an amount effective to provide a desired color and opacity to the coating powder base composition. The amount of pigment used in the coating powder base composition may vary depending upon the particular resin employed as well as for the particular end use of the coating powder base composition. Typically, a pigment is present in the coating powder base composition in an amount up to 40 phr, preferably from 10 to 30 phr, more preferably from 15 to 25 phr, and most preferably from 17 to 23 phr.

Extender pigments may also optionally be included in the coating powder base compositions such as barium sulfate (7727-43-7), calcium carbonate (1317-65-3), and titanium dioxide (134-67-7, 1317-80-2). Such pigments may be used as a filler, if desired.

The following comparative example illustrates the importance of viscosity upon the base composition. The following base compositions were prepared:

| **INGREDIENT** | **BASE COMPOSITION A** | **BASE COMPOSITION B** |
|---|---|---|
| COOH Polyester Resin | 70% | 70% |
| Triglycidyl Isocyanurate | 5.2% | 5.2% |
| Flow Additive | 1.0% | 1.0% |
| Resin Modifier | 1.5% | - |
| Benzoin | 0.5% | 0.5% |
| Titanium Oxide | 1% | 1% |
| Novaperm Red F5RK | 5% | 5% |
| Barium Sulphite | 15.8% | 17.3% |
| GLOSS - ASTM D523 | 95 | 90 |
| VISCOSITY - Pa·s | ≈ 50 | ≈ 110 |

Base Composition A and Base Composition B varied only by a function of their viscosities. Each base composition was post-mixed with TiO₂, resulting in a coating powder composition of 90% wt % base composition and 10 wt % TiO₂. The color base composition was bright with a target coating powder mixture of hot pink. The coating powder mixture was electrostatically charged, applied to a substrate, and cured to form a coating. The lower viscosity, Composition A, shows excellent dispersibility of the TiO₂ with no effect on coating smoothness. On the other hand, Composition B was greatly affected by the drying action of the TiO₂. Coating smoothness suffered and dispersibility was poor. The panel is visibly two-toned and thus not aesthetically pleasing.

Test results reflecting the above comments are set forth below:

| **PROPERTY** | **BASE COMPOSITION A** | **BASE COMPOSITION B** |
|---|---|---|
| Viscosity | ≈50 Pa·s | ≈110 Pa·s |
| Coating Smoothness | 8 | 5 |
| (Ford Scale: 1 worst | | |
| 10 best) | | |
| Gloss | 95 | 90 |
| Tinting Agent Dispersion | Excellent | Average |

A typical premixed thermosetting coating powder base composition of the present invention is set out below.

| **WHITE BASE** | |
|---|---|
| Carboxyl polyester resin | 65.0 |
| Triglycidyl isocyanurate (curing agent) | 4.8 |
| Resin modifier | 1.5 |
| Flow additive | 1.0 |
| Benzoin (degassing agent) | 0.5 |
| Titanium dioxide (pigment) | 27.2 |

Premixed thermosetting coating powder base compositions may be prepared by conventional methods. The components in the thermosetting coating powder base composition are first assembled and then mixed. The mixture is then passed through an extruder where the mixture is melt-mixed. The melt mixture may be cooled by pinch rollers where it becomes a thin brittle chip, which is then pulverized and sieved into particulate or powder form.

As set forth above, particulate, tinting agents, such as mixed metal oxides, titanium dioxide, hybrid organic-inorganic materials, and/or organic polymer soluble dyes are post-mixed with the particulate premixed thermosetting coating powder base compositions. As will be noted in the detailed description of tinting agents set forth below, the respective manufacturing procedures produce very table compounds. Stability of the tinting agent is necessary to achieve physical and chemical integrity of the resultant coating.

The tinting agents of the present invention are compounds used to change the color of a pre-mixed thermosetting coating powder base composition. The tinting agents have a positive color value and are in the form of a dry powder. As set out above, tinting agents may be mixed metal oxides, titanium dioxide, hybrid organic-inorganic materials, and/or organic polymer soluble dyes. The tinting agent may comprise mixtures of the above tinting agents.

It is important that several of the tinting agents are chemically stable because the interaction of the coated surface with other chemicals would be detrimental to the tinting agents which are located at or near the surface of the coating. For example, a fingerprint, solvent, or any other substance could react with the tinting agent. The calcined inorganic components are preferable because such compounds are formed at very high temperatures and have crystal lattice arrangements that render such tinting agents impervious to most chemicals. On the other hand, some organic pigments or tinting agents will readily react to many chemicals thereby making pigments or agents incompatible with the results of the invention.

Another reason for using the tinting agents of the invention is because such agents can be finely ground to obtain particle sizes on the order of 5 µm (microns) or less with resultant reliable particle size distributions. It is preferred to obtain particle sizes on the order of 3 µm (microns) or less. Particle size and distribution are important because individual particles are difficult to see with the naked eye once oriented in the cured or solidified coating. In addition, the tinting agents of the invention exhibit very good ultraviolet (UV) stability that leads to good weatherability.

In general, mixed metal oxides may be categorized within one of the nine groups below. Each group may contain multiple tinting agents.

### 1. Manganese Ammonium Pyrophospate; NII₄MnP₂O₇ (Red Shade Violet).

Manganese ammonium pyrophosphate is an inorganic compound prepared by the reaction of the components in a molten state. The components used are manganese dioxide, diammonium phosphate, and phosphoric acid. The components are mixed thoroughly in a high temperature reactor. As the temperature increases, the materials form a slurry which thickens at the reaction temperature of 316°C (600°F). At the time of reaction, the material turns violet in color. The material can then be ground into a fine powder having a size between 0.7 and 1.5 µm (microns).

### 2. Iron Blue; FeNH₄Fe(CN)₆ (Dark Blue).

Iron blue is prepared by the reaction of sodium ferrocyanide and ferrous sulfate in the presence of ammonium sulfate to yield leucoferricyanide. The intermediate, Berlin white, is then dissolved in sulfuric acid and oxidized with sodium bichromate to produce the iron blue precipitate. This precipitate is then washed, filtered, dried, and pulverized to 0.05 to 0.2 micron particle size.

### 3. Bismuth Vanadate/Molybdate; 4BiVO₄3BiMoO₆ (Bright Yellow)

Bismuth vanadate is prepared by precipitating bismuth, vanadium, and molybdenum salts in nitric acid and then calcining the crystals at temperatures around 600°C. Bisuth vanadate is greenish-yellow in color and is ground to 0.3 µm (microns). Bismuth vanadate has a spinal-type structure, thus making exposure to the metal ions virtually nil; and because it is calcined, its stability is excellent.

### 4. Cerium Sulfide (Cerium Red Tinting agent); Ce₂S₃ (Red).

Cerium sulfide is a rare-earth based inorganic tinting agent that is red in color. Specific gravity is 5.02, decomposition temperature is 400°C (752°F).

### 5. Copper Chromite Black Spinel; CuCr₂O₄ (Black).

Copper chromite black spinel is prepared by mixing copper carbonate with sodium dichromate either in a dry form or aqueous slurry. The blended mixture is then calcined in a furnace at a temperature between 816-871°C (1500-1600°F) until the reaction is complete (about an hour). The product is then washed, dried, and subjected to a fine grinding to attain a size of 0.6 to 0.8 µm (microns).

### 6. Cobalt Aluminate Blue Spinel; CoO:Al₂O₃ (Red Shade Blue).

### Cobalt Titanate Green Spinel; Co₂TiO₄ (Green).

### Cobalt Chromite Blue-Green Spinel; CoCr₂O₄ (Green shade blue/turquoise).

These cobalt mixed metal oxides are prepared in a standard calcination process with metal ions in predetermined ratios. The metal ions are first mixed and then calcined in furnaces at 1316°C (2400°F). The crude material produced is then ground into a fine powder that can range between from 0.4 and 1.8 µm (microns). These products can also be modified with many different metal ions such as zinc and lithium to produce many differently colored materials. Other materials include Cobalt Chrome Aluminate (Chrome Cobalt Alumina); 2CO:Cr₂O₃Al₂ O₃. They may vary in color from a very violet shade of blue to turquoise.

### 7. Iron Titanate Brown Spinel; Fe₂TiO₄.

### Iron Chromite Brown Spinel; FeCoCr₂O₄.

### Zinc Chromite Brown Spinel; (Zn,Fe)(Fe,Cr)₂O₄.

These mixed metal oxides are prepared in the manner described above for category 7. These materials are calcined between 800-1100°C. They range in color from a tan to a russett brown. They have particle sizes from 0.8 to 1.9 µm (microns).

### 8. Cobalt Phosphate; CoO:PO₄ (Blue shade violet).

Cobalt phosphate is made by the calcination process described for the preparation of cobalt aluminate (category 6) above.

### 9. Chrome Antimony Titanate Buff; Cr₂O₃:Sb₂O₅:31 TiO₂ (Goldenrod yellow)_{.}

### Nickel Antimony Titanate Buff Rutile; NiSb₂O₅:31 TiO₂ (Bright Light Yellow).

Depending on the exact ratios, these mixed metal oxides produce colors that range from light brown to light yellow. These mixed oxides are made by calcination in the presence of titanium dioxide, chromium oxide (Cr₂O₃), and antimony oxide (Sb₂O₃), and reacted at temperatures of about 538°C (1000°F) to form these spinel-type crystalline structures. The crystalline structures are ground to from 0.5 to 1.0 µm (microns). Other substitutions can be made to produce compounds such as Chrome Niobium Titanate (Cr₂O₃;Nb₂O₃:31TiO₂) and Chrome Tungsten Titanate (Cr₂O₃:W₂O₆:31TiO₂).

The mixed metal oxide may be a synthetic mixed metal oxide. Typical mixed metal oxides may be selected from the group consisting of NH₄MnP₂O₇, FeNH₄Fe(CN)₆, 4BiVO₄:3BiMoO₆, Ce₂S₃, CuCr₂O₄, CoO:Al₂O₃, Co₂TiO₄, CoCr₂O₄, Fe₂TiO₄, FeCoCr₂O₄, (Zn,Fe)(Fe,Cr)₂O₄, CoO:PO₄, Cr₂O₃:Sb₂O₅:31TiO₂, and Ni:Sb₂O₅:31TiO₂, 2Co:Cr₂O₃:Al₂O₃, and Cr₂O₃:Nb₂O₃:31TiO₂, and Cr₂O₃:W₂O₆:31TiO₂. Preferred mixed metal oxides may be selected from the group consisting of NH₄MnP₂O₇, 4BiVO₄:3BiMoO₆, Ce₂S₃, CoO:Al₂O₃, Fe₂TiO₄, and (Zn,Fe)(Fe,Cr)₂O₄.

As set out above, the tinting agent may also be titanium dioxide (titanic anhydride, titanic acid anhydride, titanic oxide; titanium white, titania, TiO₂). Titanium dioxide is produced, in general by a chloride process by which mineral rutile or refined ore is reacted with gaseous chlorine at about 1200°C in the presence of coke to form liquid titanium tetrachloride. After distillation, the distillate is oxidized in the vapor phase to produce crude pigmentary titanium dioxide. After treatment, organic and inorganic components may be added to achieve certain properties. The material can be typically ground to a particle size of 0.18 to 0.24 µm (microns).

Organic polymer soluble dyes that may be utilized as a tinting agent are sold by Clariant under the trade names Sandoplast, Solvaperm, Hostasol, Estofil, and Polysynthren. Such materials are chemical compounds that impart coloration to polymeric coatings by way of solubility. Such compounds are different from pigments in that these dyes completely dissolve within the matrix of the resin system of the coating. The above-mentioned dyes are compatible with the base compositions of the invention because the dyes do not separate when mixed with such base compositions, and uniform color is obtained in the final product.

The chemical family of organic polymer soluble dyes is referred to as "solvent dyes". The red dye, e.g. Sandoplast Red G, is known as perinone colorant (syn: Solvent Red 135, CAS #20749-68). Examples of such solvent dyes include, but are not limited to, Sandoplast Red G, Sandoplast Red BB, Polysynthren Blue, and Polysynthren Green.

The amount of tinting agent used in the coating powder base compositions of the present invention is an amount effective to tint the coating powder base composition to obtain a desired color. The amount of tinting agent used in the coating powder base composition may vary depending upon the particular tinting agent employed as well as for the particular end use of the coating powder base composition. In a typical embodiment, the tinting agent may be present in the coating powder base composition up to 25%.

In a further embodiment of the invention, additives may also be post-mixed to the premixed coating powder base compositions of the present invention. Such additives may be included with or without the above-mentioned tinting agents. An additive is an agent that is combined with the premixed coating powder base composition to alter a coating property of the base composition such as by lowering gloss, enhancing mar-resistance, minimizing out-gassing, obtaining a desired textured surface, obtaining a desired structured surface, or enhancing electrical conductivity. The additives which may be employed in the present invention consist of a wide variety of compounds including finely ground amorphous silica, low molecular weight polyolefins, highly branched, high molecular weight polymers such as glycidyl methacrylate acrylic cured polyesters, that when post-mixed with the base composition can provide desirable coating property(ies). The additives desirably have a small particle size, 0.1 - 2.5 µm (microns) to maximize total surface area per unit mass. However, particles up to 35 µm (microns) or more can be utilized to achieve desired physical coating properties, such as gloss. The additives are thus more efficient in modifying the powder coating base composition for the desired property. Non-limiting illustrative additives include deglossing agents, mar-resistance enhancing agents, outgassing agents, texturing agents, structuring agents, and conductive agents. For example, polyethylene wax, in finely ground powder (<1 micron) may be added to a base composition in specific proportions to impart such properties as lubricity, reduced gloss, or degassing. In addition, a micronized clear polyurethane coating powder can be effective to degloss polyester-TGIC base powders due to the incompatibility of the two chemistries. These additives can be used in conjunction with the tinting agents so that all of the coating properties can be adjusted to achieve a given objective.

Another embodiment of the invention involves preparing coating powders having a desired property, such as gloss, following curing. Gloss, as discussed herein, is that measured by the 60° Gardner-Haze Gloss Test.

In such embodiment, two or more base compositions are combined to obtain a desired gloss. The method involves providing a first resinous particulate base composition having a viscosity of from 15 to 85 Pa·s and then adding a second resinous particulate base composition having a viscosity of from 50 to 150 Pa·s. The addition of a second base composition comprising a urethane polymer, an acrylic-containing polymer, and/or mixtures thereof, results in a gloss that is different than would have been produced using only the first base composition. Such combination of base compositions facilitates the production of small batches of coating powders, each having different glosses.

The relationship of gloss to the ratio of first base composition and second base composition is believed to be mathematically linear. For example, should the first composition have a 95 gloss and the second composition have a 5 gloss, and such compositions are mixed in a one-to-one ratio, the resulting gloss would be 50. [(95 + 5) - 2]. Thus, a variety of glosses may be easily obtained through the expedient of mixing at least two base compositions.

The second base composition may comprise a urethane polymer, an acrylic-containing polymer, and mixtures thereof. Suitable acrylic-containing polymers are polyester/acrylic hybrid polymers and epoxy/acrylic hybrid polymers. Polyester/acrylic hybrid polymers are preferred because such polymers have very low gloss and provide a wider range of potential glosses than other acrylic-containing polymers that have higher gloss. Such second base compositions are incompatible to at least some extent with the first base composition; and thereby the addition of a second base composition serves to obtain changes in gloss (in the cured state) from the gloss that would have been obtained by curing the first base composition alone. A desired gloss in the mixed coating powder is obtained through control of the proportions of the first and second base compositions. The amount of second base composition is that effective to cause the mixed coating powder to have a desired gloss. Such effective amount may range from very low percentages to very high percentages of the total weight of the mixed coating powder.

The base compositions maybe combined with a tinting agent to obtain a desired color, as well as a desired gloss, as discussed more fully herein.

The use of a second base composition to effect gloss control is illustrated below.

A first base composition set forth below may be utilized:

| **FIRST BASE COMPOSITION** | |
|---|---|
| Carboxyl polyester resin | 65.0 |
| Triglycidyl isocyanurate (curing agent) | 4.8 |
| Resin modifier | 1.5 |
| Flow additive | 1.0 |
| Benzoin (degassing agent) | 0.5 |
| Titanium dioxide (pigment) | 27.2 |

A second base composition within the ranges specified below may be utilized:

| **SECOND BASE COMPOSITION** | |
|---|---|
| **INGREDIENT** | **AMOUNT WT % (Based upon total mixture wt)** |
| Carboxyl polyester resin | 30-60 |
| Glycidyl methacrylate acrylic | 15-25 |
| Flow additive | 0-1 |
| Benzoin (degassing agent) | 0-.8 |
| Titanium dioxide (pigment) | 0-40 |
| Filler (barium sulphate/calcium carbonate) | 0-45 |

The above base compositions may be the same color. The first base composition has a gloss of 90-95, and the second base composition has a gloss of 3-7. A mixing composition can be derived using various ratios of the respective base compositions to achieve mixed products having a gloss ranging between 3 and 95. Tinting agents can also be added to the mixture to change its color. The ratio is selected to obtain a desired gloss. To further augment dispersion of these ingredients, as well as improving the overall transfer efficiency and fluidization of the coating powder, a small effective amount of treated sub-micron amorphous fumed silica may optionally be incorporated along with the tinting agents and additives.

The tinting agents and additives can be mixed with the coating powder base composition by means of a conventional mixing vessel that imparts sheer on the materials, thereby producing a homogeneous mixture. A suitable high intensity mixer is commercially available from Henschel. Due to the fluid-like nature of the base powder, it behaves much like a liquid allowing thorough dispersion to occur in relatively short times. Considering the alternative of extrusion, which achieves dispersion only by very high temperatures in addition to mechanical shear, this method of dispersion is quite efficient because the product is ready for use after mixing and does not require any grinding or sieving.

As a further example, set out below is the composition of a 60 gloss pastel yellow with good fluidizing properties. In the table below, three trials were performed that could be typical for any color match using this technology. Trial A is a starting composition. The ingredients were assembled in a mixing device and mixed for a specified amount of time. Trial B is the first adjustment in which the color was too red, and the gloss was slightly too high. This was remedied by an addition of green tinting agent to correct the color and a 20% increase in the deglossing additive to fine tune the gloss. These ingredients were simply added to the mixer containing Trial A and mixed for the same amount of time as Trial A. Evaluation of Trial B showed that the hue was adequately adjusted, but the color had darkened slightly. Since the gloss was now acceptable, we proceed with Trial C with the sole objective of slightly lightening the color. White tinting agent was added to the Trial B composition and mixed for the specified amount of time. Trial C is the final product for the 60 gloss pastel yellow.

| **COMPONENT** | **TRIAL** | | |
|---|---|---|---|
| | **A** | **B** | **C** |
| White Base | 97.9 | 97.6 | 97.3 |
| Yellow tinting agent | 1 | 1 | 1.1 |
| Green tinting agent | | 0.1 | 0.1 |
| White Tinting agent | | | 0.2 |
| Fluidizing Additive | 0.1 | 0.1 | 0.1 |
| Deglossing Additive | 1 | 1.2 | 1.2 |

The additives used in this system work on the same premise with the exception of chemical reactivity. Some additives derive their role by reacting with the base powder coating to create changes such as deglossing or texturing.

Throughout this application, various publications have been referenced. The disclosures in these publications are incorporated herein by reference in order to more fully describe the state of the art.

The invention being thus described, it will be obvious that the same may be varied in many ways. Such variations are not to be regarded as a departure from the spirit and scope of the invention, and all such modifications are intended to be included within the scope of the following claims.

## Claims

1. A method for preparing a final coating powder composition mixture, wherein
a) a particulate coating powder base composition is pre-produced, said coating powder base composition comprising a resin and a resin modifying agent, which is a member selected from the group consisting of an alkylammonium salt of a polyfunctional polymer, a polysiloxane copolymer, an acrylic homopolymer, an acrylic copolymer, a salt of an alkyl amide ester, admixtures of any of said preceding members, and a mixture of silica and any of said preceding members, and which is present in an amount of 0.1 to 5 phr (parts of ingredient per hundred parts of resin), wherein the constituents of the coating powder base composition are mixed, the mixture is extruded, and the extrudate is ground into a powder, and wherein said base composition has a viscosity of from 15 to 85 Pa·s when measured using an ICI cone plate viscosimeter set at 160°C;
b) a particulate stable tinting agent is provided in an amount from 0.01% to 20% of the weight of the coating powder base composition; and then
c) said particulate coating powder base composition and said particulate tinting agent are mixed in a final, color-producing mixing step to form a final coating powder mixture having a desired color.

2. The method of claim 1, wherein said coating powder base composition has a viscosity of from 15 to 50 Pa·s, preferably of from 15 to 30 Pa·s, when measured using an ICI cone plate viscosimeter set at 160°C.

3. The method of any of claims 1 and 2, wherein said resin modifying agent is present in the coating powder base composition in an amount of 0.5 to 4 phr, preferably 1 to 2 phr.

4. The method of any of claims 1 to 3, wherein said resin is present in the coating powder base composition in an amount of 40 to 95 % by weight of the composition, preferably 50 to 85 % by weight, more preferably 55 to 75 % by weight, most preferably 60 to 70 % by weight.

5. The method of any of claims 1 to 4, wherein the coating powder base composition further comprises a curing agent, preferably in an amount of 2 to 40 phr, more preferably 5 to 35 phr, even more preferably 10 to 25 phr, most preferably 15 to 20 phr.

6. The method of one of the claims 1 to 5, wherein said tinting agent comprises at least one of the following tinting agents: titanium dioxide, a mixed metal oxide, an organic polymer soluble dye, or a hybrid organic-inorganic material.

7. A final coating powder composition mixture produced by the method of one of the claims 1 to 6.

8. A final coating powder composition mixture having a desired color, wherein said final coating powder composition mixture comprisesa) a particulate coating powder base composition, said coating powder base composition comprising a resin and a resin modifying agent, which is a member selected from the group consisting of an alkylammonium salt of a polyfunctional polymer, a polysiloxane copolymer, an acrylic homopolymer, an acrylic copolymer, a salt of an alkyl amide ester, admixtures of any of said preceding members, and a mixture of silica and any of said preceding members, and which is present in an amount of 0.1 to 5 phr (parts of ingredient per hundred parts of resin), wherein the constituents of the coating powder base composition are mixed, the mixture is extruded, and the extrudate is ground into a powder, and wherein said base composition has a viscosity of from 15 to 85 Pa·s when measured using an ICI cone plate viscosimeter set at 160°C, and
b) a particulate stable tinting agent in an amount from 0.01% to 20% of the weight of the coating powder base composition.

9. The final coating powder composition mixture of claim 8, wherein said coating powder base composition has a viscosity of from 15 to 50 Pa·s, preferably of from 15 to 30 Pa·s, when measured using an ICI cone plate viscosimeter set at 160°C.

10. The final coating powder composition mixture of any of claims 8 and 9, wherein said resin modifying agent is present in the coating powder base composition in an amount of 0.5 to 4 phr, preferably 1 to 2 phr.

11. The final coating powder composition mixture of any of claims 8 to 10, wherein said resin is present in the coating powder base composition in an amount of 40 to 95 % by weight of the composition, preferably 50 to 85 % by weight, more preferably 55 to 75 % by weight, most preferably 60 to 70 % by weight.

12. The final coating powder composition mixture of any of claims 8 to 11, wherein the coating powder base composition further comprises a curing agent, preferably in an amount of 2 to 40 phr, more preferably 5 to 35 phr, even more preferably 10 to 25 phr, most preferably 15 to 20 phr.

13. The final coating powder composition mixture of one of the claims 8 to 12, wherein said tinting agent comprises at least one of the following tinting agents: titanium dioxide, a mixed metal oxide, an organic polymer soluble dye, or a hybrid organic-inorganic material.

## Patentansprüche

1. Verfahren zum Herstellen eines fertigen Beschichtungspulverzusammensetzungsgemischs, wobei
a) eine partikuläre Beschichtungspulverbasiszusammensetzung vorproduziert wird, wobei die Beschichtungspulverbasiszusammensetzung ein Harz umfasst und ein Harzmodifikationsmittel, welches ein Mitglied aus der Gruppe, bestehend aus einem Alkylammoniumsalz eines polyfunktionellen Polymers, einem Polysiloxancopolymer, einem Acrylhomopolymer, einem Acrylcopolymer, einem Salz eines Alkylamidesters, Gemischen der vorgenannten Mitglieder und einem Gemisch von Siliciumdioxid und einem der vorgenannten Mitglieder, ist, und welches in einer Menge von 0,1 bis 0,5 phr (Anteil des Bestandteils pro hundert Anteilen an Harz) vorliegt, wobei die Bestandteile der Beschichtungspulverbasiszusammensetzung gemischt werden, die Mischung extrudiert wird und das Extrudat in ein Pulver gemahlen wird, und wobei die Basiszusammensetzung eine Viskosität von 15 bis 85 Pa s hat, gemessen mit einem auf 160° C eingestellten ICI-Kegel-Platten-Viskosimeter,
b) ein partikuläres stabiles Abtönungsmittel in einer Menge von 0,01 % bis 20 % des Gewichtes der Beschichtungspulverbasiszusammensetzung bereitgestellt wird, und dann
c) die partikuläre Beschichtungspulverbasiszusammensetzung und das partikuläre Abtönungsmittel in einem finalen, farbproduzierenden Mischschritt gemischt werden, um ein fertiges Beschichtungspulvergemisch zu bilden, das eine gewünschte Farbe hat.

2. Verfahren nach Anspruch 1, wobei die Beschichtungspulverbasiszusammensetzung eine Viskosität von 15 bis 50 Pa s hat, vorzugsweise von 15 bis 30 Pa s, gemessen mit einem auf 160° C eingestellten ICI-Kegel-Platten-Viskosimeter.

3. Verfahren nach einem der Ansprüche 1 und 2, wobei das Harzmodifikationsmittel in der Beschichtungspulverbasiszusammensetzung in einer Menge von 0,5 bis 4 phr, vorzugsweise 1 bis 2 phr, vorliegt.

4. Verfahren nach einem der Ansprüche 1 bis 3, wobei das Harz in einer Menge von 40 bis 95 Gew.-% der Zusammensetzung in der Beschichtungspulverbasiszusammensetzung vorliegt, vorzugsweise 50 bis 85 Gew.-%, noch bevorzugter 55 bis 75 Gew.%, am meisten bevorzugt 60 bis 70 Gew.-%.

5. Verfahren nach einem der Ansprüche 1 bis 4, wobei die Beschichtungspulverbasiszusammensetzung weiterhin einen Härter aufweist, vorzugsweise in der Menge von 2 bis 40 phr, vorzugsweise 5 bis 35 phr, noch bevorzugter 10 bis 25 phr, am meisten bevorzugt 15 bis 20 phr.

6. Verfahren nach einem der Ansprüche 1 bis 5, wobei das Abtönungsmittel mindestens eines der folgenden Abtönungsmittel umfasst: Titandioxid, ein gemischtes Metalloxid, ein organischer polymerlöslicher Farbstoff oder ein organisch-anorganisches Hybridmaterial.

7. Fertiges Beschichtungspulverzusammensetzungsgemisch, hergestellt nach dem Verfahren nach einem der Ansprüche 1 bis 6.

8. Fertiges Beschichtungspulverzusammensetzungsgemisch mit einer gewünschten Farbe, wobei das fertige Beschichtungspulverzusammensetzungsgemisch Folgendes umfasst:
a) eine partikuläre Beschichtungspulverbasiszusammensetzung, wobei die Beschichtungspulverbasiszusammensetzung ein Harz umfasst und ein Harzmodifikationsmittel, welches ein Mitglied aus der Gruppe, bestehend aus einem Alkylammoniumsalz eines polyfunktionellen Polymers, einem Polysiloxancopolymer, einem Acrylhomopolymer, einem Acrylcopolymer, einem Salz eines Alkylamidesters, Gemischen der vorgenannten Mitglieder und einem Gemisch von Siliciumdioxid und einem der vorgenannten Mitglieder, ist, und welches in einer Menge von 0,1 bis 0,5 phr (Anteil des Bestandteils pro hundert Anteilen an Harz) vorliegt, wobei die Bestandteile der Beschichtungspulverbasiszusammensetzung gemischt sind, die Mischung extrudiert ist und das Extrudat in ein Pulver gemahlen ist, und wobei die Basiszusammensetzung eine Viskosität von 15 bis 85 Pa s hat, gemessen mit einem auf 160° C eingestellten ICI-Kegel-Platten-Viskosimeter, und
b) ein partikuläres stabiles Abtönungsmittel in einer Menge von 0,01 % bis 20 % des Gewichtes der Beschichtungspulverbasiszusammensetzung.

9. Fertiges Beschichtungspulverzusammensetzungsgemisch nach Anspruch 8, wobei die Beschichtungspulverbasiszusammensetzung eine Viskosität von 15 bis 50 Pa s hat, vorzugsweise von 15 bis 30 Pa s, gemessen mit einem auf 160° C eingestellten ICI-Kegel-Platten-Viskosimeter.

10. Fertiges Beschichtungspulverzusammensetzungsgemisch nach einem der Ansprüche 8 und 9, wobei das Harzmodifikationsmittel in der Beschichtungspulverbasiszusammensetzung in einer Menge von 0,5 bis 4 phr, vorzugsweise 1 bis 2 phr, vorliegt.

11. Fertiges Beschichtungspulverzusammensetzungsgemisch nach einem der Ansprüche 8 bis 10, wobei das Harz in einer Menge von 40 bis 95 Gew.-% der Zusammensetzung in der Beschichtungspulverbasiszusammensetzung vorliegt, vorzugsweise 50 bis 85 Gew.-%, noch bevorzugter 55 bis 75 Gew.-%, am meisten bevorzugt 60 bis 70 Gew.-%.

12. Fertiges Beschichtungspulverzusammensetzungsgemisch nach einem der Ansprüche 8 bis 11, wobei die Beschichtungspulverbasiszusammensetzung weiterhin einen Härter aufweist, vorzugsweise in der Menge von 2 bis 40 phr, vorzugsweise 5 bis 35 phr, noch bevorzugter 10 bis 25 phr, am meisten bevorzugt 15 bis 20 phr.

13. Fertiges Beschichtungspulverzusammensetzungsgemisch nach einem der Ansprüche 8 bis 12, wobei das Abtönungsmittel mindestens eines der folgenden Abtönungsmittel umfasst: Titandioxid, ein gemischtes Metalloxid, ein organischer polymerlöslicher Farbstoff oder ein organisch-anorganisches Hybridmaterial.

## Revendications

1. Procédé de préparation d'un mélange final de composition de revêtement en poudre, dans lequel
a) une composition de base de revêtement en poudre particulaire est produite au préalable, ladite composition de base de revêtement en poudre comprenant une résine et un agent modificateur de résine, qui est un élément choisi dans le groupe constitué par un sel d'alkylammonium d'un polymère polyfonctionnel, un copolymère de polysiloxane, un homopolymère acrylique, un copolymère acrylique, un sel d'un ester d'alkylamide, les mélanges de n'importe lesquels desdits éléments précédents, et un mélange de silice et de n'importe lesquels desdits éléments précédents, et qui est présent en une quantité allant de 0,1 à 5 phr (parties d'ingrédient pour cent parties de résine), dans lequel les constituants de la composition de base de revêtement en poudre sont mélangés, le mélange est extrudé, et l'extrudat est broyé sous forme de poudre, et dans lequel ladite composition de base a une viscosité de 15 à 85 Pa·s lorsqu'elle est mesurée en utilisant un viscosimètre de type cône-plan ICI, réglé à 160°C;
b) un agent de coloration particulaire stable est fourni à raison de 0,01% à 20% du poids de la composition de base de revêtement en poudre; et ensuite
c) ladite composition de base de revêtement en poudre particulaire et ledit agent de coloration particulaire sont mélangés dans une étape de mélange finale de production de couleur pour former un mélange final de revêtement en poudre ayant la couleur souhaitée.

2. Procédé selon la revendication 1, dans lequel ladite composition de base de revêtement en poudre a une viscosité de 15 à 50 Pa·s, de préférence, de 15 à 30 Pa·s, lorsqu'elle est mesurée en utilisant un viscosimètre de type cône-plan ICI, réglé à 160°C.

3. Procédé selon l'une quelconque des revendications 1 et 2, dans lequel ledit agent modificateur de résine est présent dans la composition de base de revêtement en poudre en une quantité de 0,5 à 4 phr, de préférence, 1 à 2 phr.

4. Procédé selon l'une quelconque des revendications 1 et 3, dans lequel ladite résine est présente dans la composition de base de revêtement en poudre à raison de 40 à 95% en poids de la composition, de préférence, 50 à 85% en poids, plus préférablement, 55 à 75% en poids, le plus préférablement, 60 à 70% en poids.

5. Procédé selon l'une quelconque des revendications 1 et 4, dans lequel la composition de base de revêtement en poudre comprend en outre un durcisseur, de préférence, en une quantité de 2 à 40 phr, plus préférablement 5 à 35 phr, encore plus préférablement 10 à 25 phr, le plus préférablement 15 à 20 phr.

6. Procédé selon l'une des revendications 1 et 5, dans lequel ledit agent de coloration comprend au moins l'un des agents de coloration suivants: dioxyde de titane, un oxyde métallique mixte, un colorant soluble dans un polymère organique ou un matériau hybride organique-inorganique.

7. Mélange final de composition de revêtement en poudre produit par le procédé selon l'une des revendications 1 à 6.

8. Mélange final de composition de revêtement en poudre ayant la couleur souhaitée, où ledit mélange final de composition de revêtement en poudre comprend
a) une composition de base de revêtement en poudre particulaire, ladite composition de base de revêtement en poudre comprenant une résine et un agent modificateur de résine, qui est un élément choisi dans le groupe constitué par un sel d'alkylammonium d'un polymère polyfonctionnel, un copolymère de polysiloxane, un homopolymère acrylique, un copolymère acrylique, un sel d'un ester d'alkylamide, les mélanges de n'importe lesquels desdits éléments précédents, et un mélange de silice et de n'importe lesquels desdits éléments précédents, et qui est présent en une quantité de 0,1 à 5 phr (parties d'ingrédient pour cent parties de résine), dans lequel les constituants de la composition de base de revêtement en poudre sont mélangés, le mélange est extrudé, et l'extrudat est broyé sous forme de poudre, et dans lequel ladite composition de base a une viscosité de 15 à 85 Pa·s lorsqu'elle est mesurée en utilisant un viscosimètre de type cône-plan ICI, réglé à 160°C; et
b) un agent de coloration particulaire stable à raison de 0,01% à 20% du poids de la composition de base de revêtement en poudre.

9. Mélange final de composition de revêtement en poudre selon la revendication 8, dans lequel ladite composition de base de revêtement en poudre a une viscosité de 15 à 50 Pa·s, de préférence, de 15 à 30 Pa·s, lorsqu'elle est mesurée en utilisant un viscosimètre de type cône-plan ICI, réglé à 160°C.

10. Mélange final de composition de revêtement en poudre selon l'une quelconque des revendications 8 et 9, dans lequel ledit agent modificateur de résine est présent dans la composition de base de revêtement en poudre en une quantité de 0,5 à 4 phr, de préférence, 1 à 2 phr.

11. Mélange final de composition de revêtement en poudre selon l'une quelconque des revendications 8 à 10, dans lequel ladite résine est présente dans la composition de base de revêtement en poudre à raison de 40 à 95% en poids de la composition, de préférence, 50 à 85% en poids, plus préférablement, 55 à 75% en poids, le plus préférablement, 60 à 70% en poids.

12. Mélange final de composition de revêtement en poudre selon l'une quelconque des revendications 8 à 11, dans lequel la composition de base de revêtement en poudre comprend en outre un durcisseur, de préférence, en une quantité de 2 à 40 phr, plus préférablement 5 à 35 phr, encore plus préférablement 10 à 25 phr, le plus préférablement 15 à 20 phr.

13. Mélange final de composition de revêtement en poudre selon l'une des revendications 8 à 12, dans lequel ledit agent de coloration comprend au moins l'un des agents de coloration suivants: dioxyde de titane, un oxyde métallique mixte, un colorant soluble dans un polymère organique ou un matériau hybride organique-inorganique.
